# EUROPÄISCHE PATENTANMELDUNG

(11) **EP 4 108 730 A1**
(43) Veröffentlichungstag der Anmeldung: **28.12.2022**
(21) Anmeldenummer: 21180740.9
(22) Anmeldetag: 22.06.2021
(51) Int. Cl.: C09D 5/14, C09D 7/61, A01N 59/16

(54) **ANTIMIKROBIELLE SCHUTZ-SCHICHT, SUBSTRAT MIT DER ANTIMIKROBIELLEN SCHUTZ-SCHICHT UND VERFAHREN ZUM HERSTELLEN DES SUBSTRATS MIT DER ANTIMIKROBIELLEN SCHUTZ-SCHICHT**

(71) Anmelder: Siemens Aktiengesellschaft, 80333 München (DE)
(72) Erfinder: Jensen, Jens Dahl, 14050 Berlin (DE); Krüger, Ursus, 14089 Berlin (DE); Winkler, Gabriele, 13587 Berlin (DE)

(57) **Zusammenfassung**

Die Erfindung betrifft eine antimikrobielle Schutz-Schicht zum Schutz einer Substrat-Oberfläche eines Substrats, wobei die Schutz-Schicht mindestens ein antimikrobiell wirkendes Reagenz mit einer Reagenz-Färbung und mindestens ein inertes anorganisches Farb-Pigment mit einer von der Reagenz-Färbung verschiedenen Farb-Pigment-Färbung aufweist und wobei ein Reagenz-Gehalt des Reagenz in der Schutz-Schicht und ein Farb-Pigment-Gehalt des anorganischen Farb-Pigments in der Schutz-Schicht derart gewählt sind, dass sich eine Schutz-Schicht-Färbung der Schutz-Schicht von der Reagenz-Färbung unterscheidet. Gemäß der Erfindung wird auch ein Substrat mit der Schutz-Schicht zum Schutz einer Substrat-Oberfläche des Substrats angegeben. Der Gegenstand ist beispielsweise ein Gegenstand eines öffentlichen Transportmittels oder ein Gegenstand einer Infra-Struktur-Einrichtung, die von mehreren Personen genutzt wird. Daneben wird auch ein Verfahren zum Herstellen des Substrats mit der Schutz-Schicht mit folgenden Verfahrensschritten angegeben: a) Bereitstellen eines Ausgangs-Substrats mit einer Ausgangs-Substrat-Oberfläche und b) Anordnen der Schutz-Schicht an der Ausgangs-Substrat-Oberfläche. Mit der Erfindung können zu schützende Oberflächen farblich beliebig gestaltet werden. Zum Auftragen wird vorzugsweise ein Sprüh-Verfahren eingesetzt. Für flexible Substrate (z.B. aus einem Vlies-Stoff) kann ein Rolle-zu-Rolle-Verfahren angewendet werden.

## Beschreibung

Die Erfindung betrifft eine antimikrobielle Schutz-Schicht und ein Substrat mit der antimikrobiellen Schutz-Schicht. Darüber hinaus wird ein Verfahren zum Herstellen des Substrats mit der antimikrobiellen Schutz-Schicht vorgestellt.

Ein Substrat kann aus einem beliebigen Substrat-Material wie Kunststoff, Metall oder Keramik bestehen. Eine Substrat-Oberfläche des Substrats wird oftmals mit einer antimikrobiellen Schutz-Schicht versehen, um ein Anhaften von Bakterien, Viren oder anderer Mikro-Organismen auf der Substrat-Oberfläche zu verhindern. Die antimikrobielle Schutz-Schicht wirkt dazu beispielsweise bakterizid, viruzid und/oder fungizid.

Ein Bestandteil der antimikrobiellen Schutz-Schicht ist beispielweise antimikrobiell wirkendes Mangan-Dioxid (MnO₂), Braunstein) das nasschemisch aus Kaliumpermanganat (KMnO₄) und Mangan (II)-Salzen über eine Redox-Reaktion erzeugt und auf die Substrat-Oberfläche aufgebracht wird (Präzipation). Nachteil des Mangan-Dioxids ist seine braune bis dunkelbraune Farbe. Dies führt dazu, dass die Schutz-Schicht-Färbung der Schutz-Schicht ebenfalls braun bis dunkelbraun ist. Eine Einsatz-Möglichkeit einer solchen antimikrobiellen Schutz-Schicht ist daher sehr eingeschränkt.

Aufgabe der Erfindung ist es, aufzuzeigen, wie eine antimikrobielle Schutz-Schicht zusammengesetzt werden kann, damit sie zum Schutz einer Substrat-Oberfläche eines Substrats im Hinblick auf die Färbung der Schutz-Schicht variabel eingesetzt werden kann.

Zur Lösung der Aufgabe wird eine antimikrobielle Schutz-Schicht zum Schutz einer Substrat-Oberfläche eines Substrats angegeben, wobei die Schutz-Schicht mindestens ein antimikrobiell wirkendes Reagenz (anti-microbial agent) mit einer Reagenz-Färbung und mindestens ein inertes anorganisches Farb-Pigment mit einer von der Reagenz-Färbung verschiedenen Farb-Pigment-Färbung aufweist und wobei ein Reagenz-Gehalt des Reagenz in der Schutz-Schicht und ein Farb-Pigment-Gehalt des anorganischen Farb-Pigments in der Schutz-Schicht derart gewählt sind, dass sich eine Schutz-Schicht-Färbung der Schutz-Schicht von der Reagenz-Färbung unterscheidet. Gemäß einer besonderen Ausgestaltung weist die Schutz-Schicht eine aus dem Bereich von 0,5 µm bis 20 µm und insbesondere eine aus dem Bereich von 1 µm bis 10 µm ausgewählte Schutz-Schicht-Dicke auf.

Die Schutz-Schicht-Färbung (Farbe der Schutz-Schicht) ist eine Mischung (Misch-Farbe) der Reagenz-Färbung (Farbe des Reagenz) und der Farb-Pigment-Färbung (Farbe des Farb-Pigments). Dabei bleibt die antimikrobielle Wirkung des antimikrobiell wirkenden Reagenz und damit die antimikrobielle Wirkung der Schutz-Schicht erhalten. Die Schutz-Schicht wirkt antibakteriell und/oder antiviral. Die Schutz-Schicht sorgt dafür, dass Bakterien und/oder Viren abgetötet werden bzw. nicht oder nur sehr schlecht an der Substrat-Oberfläche anhaften können. Gleichzeitig kann die Färbung der Schutz-Schicht beliebig eingestellt werden.

Das anorganische Farb-Pigment ist inert. D.h. es beeinträchtigt die antimikrobielle Wirksamkeit des antimikrobiellen Reagenz nicht. Ebenfalls beeinträchtigt das anorganische Farb-Pigment im Herstell-Verfahren ein Auftragen des antimikrobiellen Reagenz bzw. der antimikrobiellen Schutz-Schicht auf die Substrat-Oberfläche bzw. auf eine Ausgangs-Substrat-Oberfläche eines Ausgangs-Substrats nicht. Eine Auftragbarkeit (Applizierbarkeit) der Schutz-Schicht auf die Substrat-Oberfläche bzw. Ausgangs-Substrat-Oberfläche bleibt erhalten.

Zur Lösung der Aufgabe wird auch ein Substrat mit der Schutz-Schicht zum Schutz einer Substrat-Oberfläche des Substrats angegeben. Das Substrat kann ein beliebiger Gegenstand mit einer zu schützenden Oberfläche sein. Der Gegenstand ist beispielsweise ein Gegenstand eines öffentlichen Transportmittels oder ein Gegenstand einer Infrastruktur-Einrichtung, die von mehreren Personen genutzt wird (z.B. Netzwerk-Drucker, Schreibtisch eines Großraum-Büros, etc.).

Gemäß einem weiteren Aspekt der Erfindung wird ein Verfahren zum Herstellen des Substrats mit der Schutz-Schicht mit folgenden Verfahrensschritten angegeben:
a) Bereitstellen eines Ausgangs-Substrats mit einer Ausgangs-Substrat-Oberfläche und
b) Anordnen der Schutz-Schicht an der Ausgangs-Substrat-Oberfläche.

In einer besonderen Ausgestaltung weist die Schutz-Schicht ein weiteres, farbneutrales antimikrobiell wirkendes Reagenz auf. Das weitere antimikrobiell wirkende Reagenz verbessert die antimikrobielle Wirkung der Schutzschicht. Da das weitere antimikrobiell wirkende Reagenz farbneutral ist, trägt es nicht bzw. nahezu nicht zur Farbe der Schutz-Schicht bei. Die Schutz-Schicht-Färbung ist nicht wesentlich von einer Färbung des Weiteren, farbneutralen antimikrobiell wirkenden Reagenz geprägt. Als weiteres, farbneutrales antimikrobiell wirkendes Reagenz kommt insbesondere elementares Silber (Ag) zum Einsatz.

Vorzugsweise weist das antimikrobiell wirkende Reagenz eine antimikrobiell wirkende Metall-Oxid-Verbindung auf. Ein Beispiel dafür ist Titandioxid (TiO₂). Insbesondere ist die antimikrobiell wirkende Metall-Oxid-Verbindung Mangen-Dioxid (Braunstein, MnO₂).

Die antimikrobiellen Eigenschaften des Mangan-Dioxids sind daher so interessant, weil Mangan-Dioxid mit Silber, das ebenfalls als antimikrobielles Reagenz wirkt, aus Sauerstoff und Feuchtigkeit der Luft (Wasser) Sauerstoff-Radikale bildet, die auch als ROS (= reactive oxygen species oder reaktive Sauerstoffspezies) bekannt sind. Diese äußert reaktive Sauerstoffspezies können Proteine, Lipide, RNA oder DNA, aus denen Bakterien und Viren bestehen, derart zerstören, indem sie mit diesen eine chemische Reaktion eingehen und damit Bakterien und Viren unschädlich machen.

Das inerte anorganische Farb-Pigment weist vorzugsweise mindestens eine Metall-Oxid-Verbindung und/oder eine MetallHydroxid-Verbindung auf. In einer besonderen Ausgestaltung kann das inerte anorganische Farb-Pigment mindestens einem aus der Gruppe Baddelyit, Granat, inverser Spinell, Kassiterit, Korund, Olivin, Perovskit, Phenakit, Rutil, Silikat, Sphen(Titanit), Spinell, Stannat und Zirkon (Zirkonat-Silikat) ausgewählten Kristall-Struktur-Typen zugeordnet werden.

Je nach Farbe des anorganischen Farb-Pigments wird die braune Farbe des Mangan-Dioxids aufgehellt, rotbraun, grau, ockerbraun oder oliv- bis lind-grün, so dass eine entsprechende Schutz-Schicht-Färbung entsteht.

Nachfolgende Aufzählungen für verschiedene anorganische Farb-Pigmente mit ihren Farb-Pigment-Färbungen sind nur beispielhaft und nicht abschließend.

Anorganische Farb-Pigmente mit blauer Farb-Pigment-Färbung:
- Thenards-Blau (Kobalt-Blau): Kobalt(II)-Aluminium-Oxid (CoAl₂O₄) mit kristalliner Spinell-Matrix.
- Ägyptisch-Blau: Kupfer(II)-Calcium-Silikat (CaCuSi₄O₁₀).
- Chinesisch Blau (Han-Blau): Kupfer(II)-Barium-Silikat (BaCuSi₂O₆).
- Zirkon-Vanadium-Blau (Zirkon-Coelin-Blau): (Zr,V)SiO₄ mit kristalliner Zirkon-Matrix.
- Kobalt-Zink-Aluminat-Blau: (Co,Zn)Al₂O₄ mit kristalliner Spinell-Matrix.
- Kobalt-Silikat: Co₂SiO₄ mit kristalliner Olivin-Matrix.
- Kobalt-Zink-Silikat-Blau: (Co,Zn)₂SiO₄ mit kristalliner Phenakit-Matrix.

Anorganische Farb-Pigmente mit grüner Farb-Pigment-Färbung:
- Rinmanns Grün (Kobalt-Grün): Kobalt(II)-Zinkat, ZnCo₂O₄ (ZnO·Co₂O₃) mit kristalliner Spinell-Matrix.
- Chrom-Oxid-Grün: Cr₂O₃.
- Türkis-Grün (Turkish Green): Cr₂O₃-Al-CoO.
- Kobalt-Chromit-Grün (Cobalt Chromite Green): CoCr₂O₄ mit kristalliner Spinell-Matrix.
- Kobalt-Titanat-Grün (Cobalt Titanate Green): Co₂TiO₄ mit kristalliner inverser Spinell-Matrix.
- Viktoria-Grün (Victoria green): 3CaO, Cr₂O₃, 3SiO₂ mit kristalliner Granat-Matrix.

Anorganische Farb-Pigmente mit gelber Farb-Pigment-Färbung:
- Zirkon-Silikat, ZrSiO₄.
- Chrom-Titan-Gelb: (Ti,Ni,Sb,Cr)O₂.
- Zink-Eisen-Gelb (Eisen-Zink-Oxid): ZnFe₂O₄.
- Nickel-Barium-Titan-Blassgelb(primrose): 2NiO, 3BaO, 17TiO₂ mit kristalliner Priderit-Matrix.
- Zinn-Vanadium-Gelb: (Sn,V)O₂ mit kristalliner Kassiterit-Matrix.
- Zirkon-Präseodym-Gelb: (Zr,Pr)SiO₄ mit kristalliner Zirkon-Matrix.
- Zirkon-Vanadium-Gelb: (Zr,V)O₂ mit kristalliner Baddelyt-Matrix.
- Nickel-Niob-Titan-Gelb: (Ti,Ni,Nb)O₂ mit kristalliner Rutil-Matrix.
- Chrom-Niob-Titan-Gelbbraun(Buff): (Ti,Cr,Nb)O₂ mit kristalliner Rutil-Matrix.
- Chrom-Wolfram-Titan-Gelbbraun(Buff) mit kristalliner Rutil-Matrix.

Anorganische Farb-Pigmente mit roter Farb-Pigment-Färbung:
- Eisen-Silikat: Fe₂O₃·SiO₂.
- Chrom-Stannat: Cr₂(SnO₃)₃.
- Zink-Eisen-Oxid: ZnFe₂O₄.
- Gold-Aluminium-Pink-Korund: Al₂O₃ + Au.
- Chrom-Aluminium-Pink-Korund: (Al,Cr)₂O₃.
- Chrom-Aluminium-Pink-Korund: (Al,Cr)₂O₃.
- Mangan-Aluminium-Pink-Korund: (Al,Mn)₂O₃.
- Zirkon-Eisen-Pink-Zirkon, (Zr, Fe) SiO₄.
- Chrom-Zinn-Pink-Sphen: CaO, SnO2, SiO₂, Cr₂O₃.
- Chrom-Aluminium-Pink-Spinell: Zn(Al,Cr)₂O₄.
- Chrome-Zinn-Orchidee-Kassiterit: (Sn,Cr)O₃.
- Englisch-Rot: geglühtes Eisen(III)-Oxid, Fe₂O₃.
- Calcium-Aluminium-Silikat (Granat): Ca₃Al₂₁SiO₄]₃.

Anorganische Farb-Pigmente mit weißer Farb-Pigment-Färbung:
- Titan(IV)-oxid (Titandioxid): TiO₂ in der Rutil-Struktur.
- Bariumtitanat: BaTiO₄ in der Perovskit-Struktur.

Das Substrat mit der zu schützenden Substrat-Oberfläche kann aus beliebigen Substrat-Materialien bestehen. Vorzugsweise weist das Substrat zumindest ein aus der Gruppe biologischer Werkstoff, Keramik, Kunststoff und Metall ausgewähltes Substrat-Material auf. Der biologische Werkstoff ist beispielsweise Holz (aus Cellusose). Kombinationen der genannten Substrat-Materialien sind dabei auch denkbar.

In einer besonderen Ausgestaltung weist das Substrat-Material ein Faser-Material auf. Das Substrat-Material liegt zumindest teilweise faserförmig vor. Beispielsweise ist das Substrat-Material ein Vliesstoff, der aus Kunststoff-Fasern (z.B. mit Polypropylen oder mit Polyamid) oder auch aus Cellulose basierten Werkstoffen aufgebaut ist.

Im Hinblick auf das Verfahren wird insbesondere zum Anordnen der Schutz-Schicht ein Sprüh-Verfahren mit Hilfe mindestens einer Spritz-Düse zum Aufsprühen mindestens eines Bestand-Teils der Schutz-Schicht und/oder zum Aufsprühen mindestens einer Ausgangs-Substanz mindestens eines Bestandteils der Schutz-Schicht durchgeführt. Als Sprüh-Verfahren (SprayVerfahren) wird vorzugsweise ein chemisches Sprüh-Verfahren verwendet. Beim chemischen Sprüh-Verfahren wird durch das Aufsprühen der Bestend-Teile wenigstens eine chemische Reaktion initiiert. Es kommt während/und oder nach dem Aufsprühen zu einer chemischen Reaktion (z.B. durch Einwirken von thermischer Energie während oder nach dem Aufsprühen). Beispielsweise wird durch das chemische Sprüh-Verfahren die Schutz-Schicht und/oder mindestens ein Bestand-Teil der Schutz-Schicht auf der Ausgangs-Substrat-Oberfläche parzipitiert. Die Schutz-Schicht bzw. der Bestand-Teil der Schutz-Schicht werden durch das chemische Sprüh-Verfahren als Parzipitat aufgetragen.

Der Bestand-Teil und/oder die Ausgangs-Substanz des Bestandteils (gemäß dem Sprüh-Verfahren) sind vorzugweise aus der Gruppe antimikrobiell wirkendes Reagenz, Ausgangs-Substanz des antimikrobiell wirkenden Reagenz, weiteres, antimikrobiell wirkendes Reagenz, Ausgangs-Substanz des weiteren antimikrobiell wirkenden Reagenz, anorganisches Farb-Pigment und Ausgangs-Substanz des anorganischen Farb-Pigments ausgewählt.

Zur Verbesserung des Verfahrens werden vor, während oder nach dem Anordnen der Schutz-Schicht das Substrat, die Substrat-Oberfläche, das Ausgangs-Substrat, die Ausgangs-Substrat-Oberfläche oder die Ausgangs-Schutz-Schicht erwärmt. Insbesondere wird daher zum Anordnen der Schutz-Schicht thermische Energie mit Hilfe einer Wärme-Quelle eingeleitet. Die Wärme-Quelle kann dabei beliebig sein, z.B. eine Quelle für Infrarot-Strahlung.

Gemäß einer besonderen Ausgestaltung wird zum Verfahren für das Beschichten eines flexiblen Substrats eine Rolle-zu-Rolle-Vorrichtung verwendet. Das Verfahren ist als Rolle-zu-Rolle-Verfahren (roll-to-roll, R2R) ausgebildet. Hierfür wird das sich auf einer Transport-Rolle befindliche unbeschichtete Substrat abgerollt, bearbeitet und schließlich als fertiges, mit der Schutz-Schicht versehenes Substrat auf eine weitere Transport-Rolle aufgerollt. Auf diese Weise kann das Substrat automatisiert und kostengünstig hergestellt werden.

Zusammenfassend sind mit der Erfindung folgende Vorteile verbunden:
- Durch den Einsatz von Farb-Pigmenten kann das antimikrobiell wirkende, braune Mangan-Dioxid(-Silber)-System der Schutz-Schicht auf sichtbaren Oberflächen wie Mund-Nasenschutzmasken angewandt werden.
- Bedienelemente diverser Medizingeräte (beispielsweise Computertomographen, Kernspintomographen oder Röntgenanlagen) bzw. deren Oberflächen lassen sich optisch ansehnlich mit dem Mangan-Dioxid(-Silber)-System und den anorganischen Farb-Pigmenten keimfrei gestalten.
- Kontaktflächen in Gebäuden und Transportmitteln (beispielsweise Züge, Flugzeuge und Autobusse) mit viel Publikumsverkehr können mit farbigen Schutz-Schichten vor Keimen geschützt werden.
- Wenn Silber und Mangan-Dioxid durch ein chemisches Sprüh-Verfahren aufgetragen werden, entstehen braune bis dunkelbraune Flecken. Diese Flecken können durch die Zugabe von anorganischen Farb-Pigmenten abgemildert oder mit Hilfe einer Mischfarbe überdeckt werden. Die Farb-Pigmente werden den jeweiligen reaktiven Spritzmedien zugesetzt. Bei den anorganischen Farb-Pigmenten handelt es sich vorzugsweise um chemisch und energetisch sehr stabile Oxide und Silikate, die in Wasser, Säuren und Laugen unlöslich sind. Da diese Farb-Pigmente chemisch sehr inert sind, nehmen sie an den chemischen Reaktionen des reaktiven Sprüh-Verfahrens nicht teil. Sie sorgen nur für eine optisch ansehnliche Oberfläche. Ein weiterer technischer Vorteil dieser Farb-Pigmente ist, dass sie aufgrund ihrer chemischen Struktur (freie Elektronenpaare im Sauerstoff-Anteil des Oxids) für eine bessere Anhaftung des Silber/Mangan-Dioxid- Systems auf den Oberflächen sorgen.
- In öffentlichen Transportmitteln wie Züge lassen sich die Kontaktflächen, die Fahrgäste berühren, durch antimikrobiell wirkende Schichten schützen. Das gilt insbesondere auch für den sanitären Bereich in den öffentlichen Transportmitteln.
- Das gleiche gilt auch für die Infrastruktur von Gebäuden (sanitäre Anlagen, Fahrstühle, Treppengelände, Sitzgelegenheiten, Schreibtische, Türklinken etc.) mit viel Publikumsverkehr.
- Bedienelemente diverser Medizingeräte (Computertomographen, Kernspintomographen, Röntgenanlagen) sowie deren Oberflächen, mit denen ein Patient in Berührung kommen kann, können zur Keimfreiheit mit der antimikrobiellen wirkenden Schutz-Schicht versehen werden.

Anhand eines Ausführungsbeispiels und der dazugehörigen Figuren wird die Erfindung näher beschrieben. Die Figuren sind schematisch und stellen keine maßstabsgetreuen Abbildungen dar.

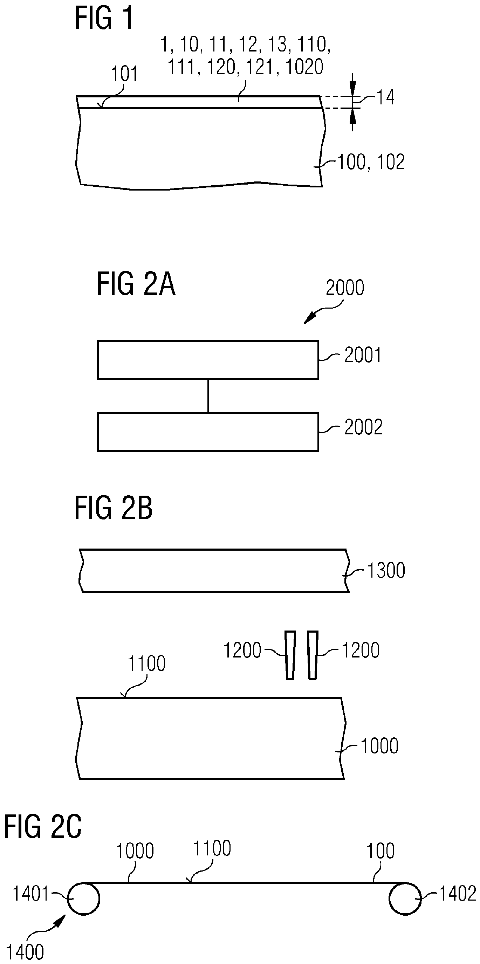

Figur 1 zeigt einen Ausschnitt eines Substrats mit einer anti-mikrobiellen Schutz-Schicht im Querschnitt.
Figur 2A zeigt ein Verfahren zum Herstellen des Substrats mit der anti-mikrobiellen Schutz-Schicht.
Figur 2B zeigt einen Ausschnitt des Ausgangs-Substrats bei der Anwendung des Verfahrens zum Herstellen des Substrats mit anti-mikrobieller Schutz-Schicht.
Figur 2C zeigt eine Rolle-zu-Rolle-Vorrichtung, die mit dem Verfahren eingesetzt werden kann.

Das Ausführungsbeispiel bezieht sich auf eine antimikrobielle Schutz-Schicht 1 zum Schutz einer Substrat-Oberfläche 110 eines Substrats 100, wobei die Schutz-Schicht 1
- mindestens ein antimikrobiell wirkendes Reagenz 11 mit einer Reagenz-Färbung 110 und
- mindestens ein inertes anorganisches Farb-Pigment 12 mit einer von der Reagenz-Färbung 110 verschiedenen Farb-Pigment-Färbung 120 aufweist und wobei
- ein Reagenz-Gehalt 111 des Reagenz 11 in der Schutz-Schicht 1 und ein Farb-Pigment-Gehalt 121 des anorganischen Farb-Pigments 12 in der Schutz-Schicht 1 derart gewählt sind, dass sich eine Schutz-Schicht-Färbung 10 der Schutz-Schicht 1 von der Reagenz-Färbung 110 unterscheidet.

Das antimikrobiell wirkende Reagenz ist MnO₂. Der Gehalt an MnO₂ in der Schutz-Schicht beträgt etwa 30 bis 50 Gew.% bezogen auf die reine AgMnO₂-Schicht. Neben MnO₂ ist in der Schutz-Schicht elementares Silber als weiteres, farbneutrales antimikrobiell wirkendes Reagenz 13 vorhanden. Der Gehalt an elementarem Silber beträgt etwa 25 bis 50 Gew.% bezogen auf die reine AgMnO₂-Schicht.

Das inerte anorganische Farb-Pigment ist eines der zuvor genannten Farb-Pigmente mit blauer, roter, gelber, grüner oder weißer Farb-Pigment-Färbung.

Das Substrat 100 weist faserförmiges Substrat-Material 102 mit Cellulose auf. Das Substrat besteht aus einem flexiblen Vliesstoff. Die beschichtete Substrat-Oberfläche wird von Cellulose-Fasern gebildet.

Die Schutz-Schicht-Dicke 14 der anti-mikrobiellen Schutz-Schicht beträgt ca. 5 µm. In einer alternativen Ausgestaltung beträgt die Schutz-Schicht-Dicke 10 µm.

Zum Herstellen des Substrats 100 werden folgende VerfahrensSchritte durchgeführt:
a) Bereitstellen 2002 eines Ausgangs-Substrats 1000 (mit den Cellulose-Fasern) mit einer Ausgangs-Substrat-Oberfläche 1100 und
b) Anordnen 2002 der Schutz-Schicht 1 an der Ausgangs-Substrat-Oberfläche 1100.

Zum Anordnen 2002 der Schutz-Schicht 1 wird ein Sprüh-Verfahren durchgeführt. Dazu wird mindestens eine Spritz-Düse 1200 zum Aufsprühen mindestens eines Bestand-Teils der Schutz-Schicht und/oder zum Aufsprühen mindestens einer Ausgangs-Substanz mindestens eines Bestandteils der Schutz-Schicht eingesetzt. Das Sprüh-Verfahren ist als chemisches Sprüh-Verfahren ausgestaltet. Dazu wird nach dem Aufsprühen thermische Energie mit Hilfe einer Wärme-Quelle 1300 in die Schutz-Schicht bzw. in das Substrat eingeleitet.

Da das Substrat flexibel ist, kann hier eine Rolle-zu-Rolle-Vorrichtung 1400 angewendet wird. Es wird ein Rolle-zu-Rolle (Roll-to-Roll)-Verfahren eingesetzt. Hierfür wird das sich auf einer Transport-Rolle 1401 befindliche unbeschichtete Substrat 1000 abgerollt, bearbeitet und als fertiges, mit der Schutz-Schicht beschichtetes Substrat 100 auf eine weitere Transport-Rolle 1402 wieder aufgerollt.

In dem Roll-to-Roll- Verfahren wird über das chemisches Sprüh-Verfahren mit spezieller Düsentechnik die antimikrobiell wirkenden Reagenzien auf die Substrat-Oberfläche aufgebracht.

Im chemischen Sprüh-Verfahren wird das verwendete Mangan-Dioxid aus einer Kalium-Permanganat-Lösung und einer Lösung aus Mangan(II)-Nitrat oder Mangan(II)-Acetat hergestellt. Vor der Reaktion der beiden Lösungen wird die Mangan(II)-Nitrat- oder die Mangan(II)-Acetat- Lösung auf pH 8 (basisch) eingestellt. Dies geschieht entweder durch Zugabe von Ammoniak bzw. Ammoniumchlorid oder durch Zugabe einer basisch wirkenden Aminosäure wie L-Lysin. Alternativ werden andere basische Aminosäuren wie L-Histidin oder L-Arginin verwendet. Die Kalium-Permanganat-Lösung und die basische Mangan(II)-Salz-Lösung werden getrennt über zwei Düsen simultan auf die zu beschichtende Substrat-Oberfläche gespritzt. In dem Moment, in dem die beiden Lösungen aufeinandertreffen, wird das Mangan-Dioxid gebildet und schlägt sich als Präzipitat auf die zu beschichtende Substrat-Oberfläche nieder.

Über eine Komproportionierung (Spezialfall einer Redoxreaktion) bildet sich aus Mn⁺⁷ und Mn⁺² Braunstein. Bei der Reaktion wird das Mangan(II)-Salz vom Kalium-Permanganat zu Mangan(IV)-Oxid oxidiert und das Kalium-Permanganat wird vom Mangan(II)-Salz zu Mangan(IV)-Oxid reduziert. Das Mangan (IV)-Oxid stammt sowohl aus dem Reduktionsmittel als auch aus dem Oxidationsmittel. Das Reduktionsmittel und das Oxidationsmittel dienen also als Ausgangs-Substanzen von Mangan-Dioxid.

Zur Beschleunigung der chemischen Reaktion wird die Ausgangs-Substrat-Oberfläche mit der aufgebrachten Ausgangs-Schutzschicht durch eine geeignete Wärme-Quelle 1300 beheizt.

Zur Abmilderung der braunen Farbe des Mangan-Dioxids werden in beiden Lösungen, also sowohl in der Kalium-Permanganat-Lösung als auch in der Mangan(II)-Salz-Lösung anorganische Farb-Pigmente suspendiert. Dabei können die Farb-Pigmente von gleicher oder unterschiedlicher chemischer Zusammensetzung sein. Diese Farb-Pigmente werden dann mit den beiden Reaktanten auf die zu beschichtende Substrat-Oberfläche gespritzt. Dabei verhalten sich die Farb-Pigmente chemisch inert und nehmen an der chemischen Reaktion nicht teil.

## Patentansprüche

1. Antimikrobielle Schutz-Schicht (1) zum Schutz einer Substrat-Oberfläche (110) eines Substrats (100), wobei die Schutz-Schicht (1)
- mindestens ein antimikrobiell wirkendes Reagenz (11) mit einer Reagenz-Färbung (110) und
- mindestens ein inertes anorganisches Farb-Pigment (12) mit einer von der Reagenz-Färbung (110) verschiedenen Farb-Pigment-Färbung (120) aufweist und wobei
- ein Reagenz-Gehalt (111) des Reagenz (11) in der Schutz-Schicht (1) und ein Farb-Pigment-Gehalt (121) des anorganischen Farb-Pigments (12) in der Schutz-Schicht (1) derart gewählt sind, dass sich eine Schutz-Schicht-Färbung (10) der Schutz-Schicht (1) von der Reagenz-Färbung (110) unterscheidet.

2. Schutz-Schicht nach Anspruch 1, wobei die Schutz-Schicht eine aus dem Bereich von 0,5 µm bis 20 µm und insbesondere eine aus dem Bereich von 1 µm bis 10 µm ausgewählte Schutz-Schicht-Dicke (14) aufweist.

3. Schutz-Schicht nach Anspruch 1 oder 2, wobei die Schutz-Schicht ein weiteres, farbneutrales antimikrobiell wirkendes Reagenz (13) aufweist.

4. Schutz-Schicht nach Anspruch 3, wobei das weitere, farbneutrale antimikrobiell wirkende Reagenz (13) elementares Silber aufweist.

5. Schutz-Schicht nach einem der Ansprüche 1 bis 4, wobei das antimikrobiell wirkende Reagenz (11) eine antimikrobiell wirkende Metall-Oxid-Verbindung aufweist.

6. Schutz-Schicht nach Anspruch 5, wobei die antimikrobiell wirkende Metall-Oxid-Verbindung MnO₂ ist.

7. Schutz-Schicht nach einem der Ansprüche 1 bis 6, wobei das inerte anorganische Farb-Pigment (12) mindestens einem aus der Gruppe Baddelyit, Granat, inverser Spinell, Kassiterit, Korund, Olivin, Perovskit, Phenakit, Rutil, Sphen, Silikat, Spinell, Stannat und Zirkon ausgewählten Kristall-Struktur-Typen zugeordnet werden kann.

8. Substrat (100) mit einer Schutz-Schicht (1) nach einem der Ansprüche 1 bis 7 zum Schutz einer Substrat-Oberfläche (101) eines Substrats (100).

9. Substrat (100) nach Anspruch 8, wobei das Substrat (100) zumindest ein aus der Gruppe biologischer Werkstoff, Keramik, Kunststoff und Metall ausgewähltes Substrat-Material (102) aufweist.

10. Substrat (100) nach Anspruch 9, wobei das Substrat-Material (102) ein Faser-Material (1020) aufweist.

11. Verfahren (2000) zum Herstellen des Substrats (100) nach einem der Ansprüche 8 bis 10 mit folgenden Verfahrensschritten:
a) Bereitstellen (2002) eines Ausgangs-Substrats (1000) mit einer Ausgangs-Substrat-Oberfläche (1100) und
b) Anordnen (2002) der Schutz-Schicht (1) an der Ausgangs-Substrat-Oberfläche (1100).

12. Verfahren nach Anspruch 11, wobei zum Anordnen (2002) der Schutz-Schicht (1) ein Sprüh-Verfahren mit Hilfe mindestens einer Spritz-Düse (1200) zum Aufsprühen mindestens eines Bestand-Teils der Schutz-Schicht (1) und/oder zum Aufsprühen mindestens einer Ausgangs-Substanz mindestens eines Bestandteils der Schutz-Schicht (1) durchgeführt wird.

13. Verfahren nach Anspruch 12, wobei als Sprüh-Verfahren ein chemisches Sprüh-Verfahren verwendet wird.

14. Verfahren nach Anspruch 12 oder 13, wobei der Bestand-Teil und/oder die Ausgangs-Substanz des Bestand Teils aus der Gruppe antimikrobiell wirkendes Reagenz, Ausgangs-Substanz des antimikrobiell wirkenden Reagenz, weiteres, antimikrobiell wirkendes Reagenz, Ausgangs-Substanz des Weiteren, antimikrobiell wirkenden Reagenz, anorganisches Farb-Pigment und Ausgangs-Substanz des anorganischen Farb-Pigments ausgewählt wird.

15. Verfahren nach einem der Ansprüche 11 bis 14, wobei zum Anordnen der Schutz-Schicht (1) thermische Energie mit Hilfe einer Wärme-Quelle (1300) eingeleitet wird.

16. Verfahren nach einem der Ansprüche 11 bis 15, wobei zum Anordnen (2002) eine Rolle-zu-Rolle-Vorrichtung (1400) verwendet wird.
